# EUROPÄISCHE PATENTSCHRIFT

(11) **EP 1 219 563 B1**
(45) Veröffentlichungstag und Bekanntmachung des Hinweises auf die Patenterteilung: **10.08.2005**
(21) Anmeldenummer: 01250243.1
(22) Anmeldetag: 28.06.2001
(51) Int. Cl.: B66C 19/00, B66C 1/66

(54) **Verladeeinrichtung für iso-container**
Transfer device for ISO containers
Dispositif de transbordement pour conteneurs ISO

(30) Priorität: 11.08.2000 DE 10040947
(43) Veröffentlichungstag der Anmeldung: 03.07.2002
(73) Patentinhaber: Gottwald Port Technology GmbH, 40597 Düsseldorf (DE)
(72) Erfinder: Kröll, Joachim, 41363 Jüchen (DE); Franzen, Hermann, Dipl.-Ing., 41238 Mönchengladbach (DE); Dobner, Mathias, Dr.-Ing., 41569 Rommerskirchen (DE)
(74) Vertreter: Moser, Jörg Michael, Dipl.-Ing.

(56) Entgegenhaltungen:
- EP-A- 0 303 884
- DE-A- 19 958 501
- FR-A- 2 409 951
- US-A- 5 951 226

## Beschreibung

Die Erfindung betrifft eine Verladeeinrichtung für ISO-Container für ein Container-Terminal, das eine Containerbrücke zum Be- und Endladen von Schiffen und automatisierten Zu- und Abtransport der Container mittels selbstfahrender Transportfahrzeuge umfasst, mit mindestens einem Container-Lastaufnahmemittel in Form eines Spreaders sowie Einrichtungen zum Zwischenpositionieren der Container innerhalb der Verladeeinrichtung zwecks Montage oder Demontage der Twistlocks und Plattformen für das damit befasste Personal.

Aus dem deutschen Gebrauchsmuster DE-U-297 19 466 ist ein Umschlagsystem für Container bekannt geworden, bei dem eine von einem Portalrahmen gebildete Containerbrücke eingesetzt wird. Der Portalrahmen ist auf einem Fahrwerk abgestützt, das entlang von Schienen parallel zum Kai, an dem das Schiff festgemacht ist, verfahrbar ist. Der Portalrahmen weist einen Ausleger auf, der sich sowohl wasserseitig als auch landseitig über die Stützkonstruktion hinaus erstreckt und an dem Laufschienen für eine Laufkatze angebracht sind, die mit Hilfe eines Spreaders Container vom Schiff auf den Kai und umgekehrt transportiert. Der Spreader ist so ausgelegt, dass er durch Manipulation vom Kranführer automatisch verriegelt mit dem Container in Eingriff bzw. außer Eingriff gebracht werden kann.

Der produktivitätsbestimmende Faktor eines solchen Umschlaggerätes ist die Zeitdauer für ein Lastspiel der Laufkatze, nämlich die Zeit, die erforderlich ist, für das Fördern der Container zwischen den Standflächen und das Lösen oder Ansetzen der Twistlocks. Diese dienen bekanntlich dazu, die auf den Standflächen übereinander gestapelten Container beim Transport, insbesondere beim Schiffstransport, gegen ein Verrutschen zu sichern. Die Container werden miteinander verriegelt, indem die Twistlocks in Öffnungen der Beschläge eingreifen und die innerhalb der Beschläge angeordneten Teile verdreht werden. Meistens werden halbautomatische Twistlocks verwendet, die beim Laden mit den unteren Beschlägen eines Containers in einer Vorposition verbunden werden. Beim Aufsetzen des Containers auf einen anderen Container findet automatisch eine Container findet automatisch eine Verrastung der Twistlocks mit dem Beschlag des unteren Containers statt, so dass diese beide nunmehr fest miteinander verbunden sind.

Beim Entladen der Container vom Standort werden zunächst vom Personal die Verriegelungen mit dem jeweils unteren Container oder dem Containerfahrzeug aufgehoben und der jeweils obere Container wird mit den noch daran befindlichen Twistlocks vom Schiff auf den Kai gefördert. Die Twistlocks müssen aber vor dem Absetzen des Containers auf die Kaifläche entfernt werden, was ebenfalls manuell geschieht, indem das dafür eingesetzte Personal unter den hängenden Container greift und die Twistlocks manuell löst und entfernt. Umgekehrt wird beim Laden der Container zunächst soweit angehoben, dass die Twistlocks von Hand zunächst in die unteren Beschläge eingesetzt werden können, bevor der Container zu seinem Standort transportiert wird.

Eine aus dem deutschen Gebrauchsmuster DE-U-297 19 466 bekannte Lösung beschreibt das Löschen und Laden der Container in zwei sich überlappenden Phasen, wobei zwei Laufkatzen eingesetzt werden, von denen die erste Laufkatze den Transport des Containers vom Schiff zu einer Manipulationsplattform und die zweite Laufkatze den Transport des Containers von der Plattform zur gewünschten Spur auf der Kaifläche übernimmt. Dort steht ein Fahrzeug zur Übernahme des Containers bereit. Die beiden die Container zeitlich überlappend transportierenden Laufkatzen reduzieren die produktive Arbeitsspielzeit, weil festgestellt wurde, dass für den Transport eines Containers zwischen Schiff und Plattform eine geringere Zeit benötigt wird, als für den Transport des Containers zur Absetzspur auf der Kaifläche einschließlich der Entnahme bzw. dem Ansetzen von Twistlocks.

Die bekannte Lösung ist aber nachteilig, weil die Verwendung der zweiten Laufkatze in der Containerbrücke zwar die Umschlagleistung erhöht, doch zusätzliche verhältnismäßig hohe Investitions-, Wartungs- und Instandhaltungskosten zur Folge hat. Darüber hinaus ist die bei der bekannten Lösung verwendete Plattform zur Montage und Demontage der Twistlocks für die Behandlung von Tank-Containern oder sonstigen Spezialcontainem (z.B. Kühlcontainer oder Container für die PKW-Vertadung) nicht geeignet. Zwar erlauben die in der Entgegenhaltung ausgeführten Auflageflächen für den Container den freien Zugang zu den Eckbeschlägen, doch ist bei dieser Technik ein geschlossener Containerboden zwingend erforderlich. Dies ist aber bei Spezialcontainem nicht immer gewährleistet. Das hat zur Folge, dass diese Container aussortiert und auf dem Kai separat von zusätzlichem Personal behandelt werden müssen.

Ausgehend von dem Stand der Technik besteht die Aufgabe der vorliegenden Erfindung darin, durch kostengünstige Maßnahmen die Umschlagleistung der Containerbrücke insgesamt zu erhöhen und dabei auch eine sichere Montage und Demontage der Twistlocks an den Eckbeschlägen zu gewährleisten.

Zur Lösung der Aufgabe wird erfindungsgemäß vorgeschlagen, dass die Verladeeinrichtung aus einem um seine senkrechte Mittelachse drehbaren, als Brückenkran mit an dessen Kranbrücke verfahrbarer Laufkatze ausgebildeten Rundlaufkran besteht, der im hinteren Bereich der landseitigen Schiene der Containerbrücke angeordnet ist und sich auf einer kreisförmigen Fahrbahn abstützt

Die erfindungsgemäße Verladeeinrichtung löst die bestehenden Probleme bekannter Systeme. Sie ersetzt die zweite Laufkatze in der Containerbrücke, ermöglicht aber gleichzeitig ein Drehen der Container um mindestens 90°. Dadurch lassen sich mit der Verladeeinrichtung der Erfindung mindestens drei Ladespuren der selbstfahrenden Transportfahrzeuge (AGV) bedienen. Diese Puffer von drei Ladespuren sowie das gezielte Ansteuern der Containerbrücke in backreach durch die AGVs verhindern zeitkritische Abläufe in der übergeordneten Terminallogistik. Dadurch kann letztendlich die Anzahl erforderlicher AGVs deutlich reduziert werden.

Die erfindungsgemäße Verladeeinrichtung soll insbesondere als ergänzende Komponente für Containerbrücken eingesetzt werden. Vorzugsweise ist die Basis der kreisförmigen Fahrbahn eine rückwärtige horizontale Erweiterung der Containerbrücke. Die Verladeeinrichtung, die fest mit dem Verbindungsträger der Containerbrückenstützen verbunden ist, übernimmt einen Teil des Lastumschlages und reduziert damit das Lastspiel. Die Laufkatze der Containerbrücke sorgt nur noch für den Transport des Containers zwischen Schiff und Verladeeinrichtung und zwar zu den Positionen, in denen die Fahrspuren der Transportfahrzeuge (AGV) verlaufen.

Es ist jedoch nach einem anderen Merkmal der Erfindung auch möglich dass die Basis der kreisförmigen Fahrbahn die Kranbrücke eines mobilen Portals mit Schienen- oder Straßenfahrwerkes ist. Das Portal ist dabei Träger des Brückenkrans, an dem die Einrichtungen zum Zwischenpositionieren der Container angeordnet sind.

Für die Übergabe der Container von der Laufkatze der Containerbrücke zur Verladeeinrichtung wird eine für das Lastspiel optimale Position des Spreaders ausgewählt. Nach dem Übergeben des Containers an die Verladeeinrichtung steuert der Brückenkran durch Drehen um seine senkrechte Achse und gleichzeitiges Verfahren seiner Laufkatze die von einer übergeordneten Container-Terminallogistik bestimmte, brückenspezifische Position zur Beladung des Transportfahrzeuges an.

Besonders günstig ist es, wenn nach einem weiteren Merkmal der Erfindung die Laufkatze des Brückenkranes eine Hubeinrichtung aufweist, die aus einem schachtartigen Basisgerüst mit Vertikalführungen für den am Spreader hängenden Container sowie einem den Container umgreifenden Hubrahmen gebildet wird der heb- und senkbar unterhalb des schachtartigen Basisgerüstes angeordnet ist. Die Ausbildung und Funktion einer derartigen Hubeinrichtung ist in der deutschen Patentanmeldung DE-A-199 58 501 ausführlich beschrieben. Ausgehend von der Schiffsentladung übernimmt die Verladeeinrichtung erfindungsgemäß an Stelle der zweiten Laufkatze der Containerbrücke den zweiten Teil des Umschlagvorganges. Dazu wird der am Spreader der Laufkatze der Containerbrücke in den Eckbeschlägen hängende Container in der Hubeinrichtung aufgenommen, u.z. unabhängig von Größe und Art der Container.

Da es sich um genormte ISO-Container handelt, kann die Hubeinrichtung für die Lastaufnahme die oberen, in Form und Position immer eindeutig definierten Eckbeschläge benutzen. So kann nach einem weiteren Merkmal der Erfindung der Hubrahmen nach Lösen des Containers vom Spreader zusammen mit dem Container in Richtung Transportfahrzeug abgesenkt werden, wozu am unteren Ende des Basisgerüstes Mittel zum Ergreifen und Halten des Spreaders sowie am Hubrahmen Mittel zum Ergreifen und Halten des Containers vorgesehen sind, wobei die Plattform zur Montage oder Demontage der Twistlocks an der Hubeinrichtung befestigt ist. Die frei zugängigen Twistlocks werden vom Personal, das sich auf der seitlich unterhalb der Container angeordneten Plattform befindet, demontiert, so dass die automatisierte Hubeinrichtung den Container auf dem Transportfahrzeug absetzen kann.

Wenn nach einem weiteren Merkmal der Erfindung vorgesehen ist, dass der Drehbewegung des Brückenkranes zur Ansteuerung einer Ladeposition eine Längsbewegung der Laufkatze an der Kranbrücke überlagerbar ist, so dient dies der zeitsparenden Ansteuerung einer bestimmten Ladespur, die zuvor von einer übergeordneten Container-Terminallogistik bestimmt wurde.

Wie bereits in der älteren Patentanmeldung DE-A-199 58 501 ausführlich beschrieben, bildet das Basisgerüst der Hubeinrichtung einen sich nach unten verjüngenden Führungsschacht, der den abgesenkten Spreader mit dem Container an seinen Längsseiten führend erfasst und der an seinen den Längsseiten des Containers zugewandten Innenseiten mit vertikal verlaufenden Gleitführungen versehen ist, in die zwei aus der Mitte des Spreaders beidseitig aus- und einfahrbare Bolzen eingreifen. Der Führungsschacht erfasst Container und Spreader frühzeitig, wobei die Feinpositionierung in Längsrichtung von den ausschiebbaren Bolzen übernommen wird, wodurch der Container in die richtige Verriegelungsposition gebracht wird.

Des weiteren sind am unteren, dem Hubrahmen zugewandten Ende des Basisgerüstes auf jeder Längsseite acht fernbetätigbare Lastaufnahmemittel-Verriegelungsbolzen vorgesehen, deren Anordnung mit der Anordnung von Öffnungen in den Beschlägen des normierten Spreaders korrespondieren. Die Erfindung nutzt die Tatsache, dass an den Stirnseiten der Twistlock-Lagerungen des Spreaders je Lagerung eine ovale Öffnung vorgesehen ist. Ein Standardspreader besitzt vier Twistlocks, die je nach Containergröße auf 20 ft, 40 ft oder 45 ft eingestellt werden. Bei einem Twin Lift-Spreader sind zweimal vier Twistlocks vorhanden, die je nach Containergröße auf 20 ft, 2x 20ft, 40 ft oder 45 ft (maximal acht Positionen pro Seite) eingestellt werden. In die ovalen Öffnungen an den Stirnseiten des Spreaders bewegen sich bei dessen Annäherung Lastaufnahmemittel (LAM)- Verriegelungsbolzen, auf die sich der Spreader in seiner Endposition auflegt. Eine Umkehr der aktiven und passiven Funktion der LAM-Verriegelung ist denkbar, d.h. die ovalen Öffnungen befinden sich an der Hubeinrichtung und die LAM-Verriegelungsbolzen sind im Spreader gelagert.

Alternativ können am unteren dem Hubrahmen zugewandten Ende des Basisgerüstes auf jeder Längsseite acht Auflagepunkte für maximal acht hydraulisch fernbetätigbare LAM-Schwenkanschläge vorgesehen sein, die am normierten Spreader an den Twistlock-Lagerungen ein- und ausschwenkbar angeordnet sind. Die Auflagepunkte übernehmen nach dem Absetzen der Last das Spreader- und Containergewicht.

Weiterhin ist erfindungsgemäß vorgesehen, dass im oberen Bereich jeder Längsseite des Hubrahmens acht fernbetätigbare Last-Verriegelungsbolzen vorgesehen sind, deren Anordnung mit der Anordnung von Öffnungen in den Beschlägen des ISO-Containers korrespondieren. Nachdem der Spreader auf dem LAM-Verriegelungsbolzen des Basisgerüstes aufliegt, bewegen sich die Last-Verriegelungsbolzen des Hubrahmens entsprechend der lastabhängigen Spreadereinstellung in die seitlichen ovalen Öffnungen der Containerecken. Vorzugsweise befindet sich zu diesem Zeitpunkt der Hubrahmen der erfindungsgemäßen Hubeinrichtung etwa in einem Abstand von ca. 50 mm unterhalb des Basisgerüstes, wobei Basisgerüst und Hubrahmen zueinander zentriert sind.

Erfindungsgemäß ist weiterhin vorgesehen, dass der Hubrahmen an vier am Basisgerüst befestigten, vertikal ausgerichteten Hydraulikzylindern oder Hubseilen eines Seilhubwerkes aufgehängt ist. Im Fall der Verwendung von Hydraulikzylindern sind deren am Hubrahmen angreifende Stangenköpfe jeweils mit einem sich in Hubrichtung erstreckenden Langloch versehen sind. Die Hydraulikzylinder ermöglichen ein Anheben des Hubrahmens gegenüber dem Basisgerüst zum Lösen der Twistlocks und ein Absenken des im Hubrahmen aufgenommenen ISO-Containers in Richtung Kai bzw. Transportfahrzeug.

Nach einem weiteren Merkmal der Erfindung ist vorgesehen, dass dem Container zugewandte Längsseitenbereiche der an dem Basisgerüst aufgehängten Plattform zur Montage oder Demontage der Twistlocks der Container aus einer Wartestellung, in der diese Längsseitenbereiche zur Vergrößerung des Ladeschachtes im Wesentlichen senkrecht stehen, in eine horizontale Arbeitsstellung dicht neben dem Container klappbar sind und nach erfolgter Montage oder Demontage der Twistlocks in die im Wesentlichen senkrechte Wartestellung zurückklappbar sind, in der gleichzeitig das Personal durch die hochgeklappten Längsseitenbereiche absturzgesichert ist.

Ein Arbeitsverfahren zum Betrieb einer Hubeinrichtung nach einem der Ansprüche 1 bis 9 ist durch folgende Schritte gekennzeichnet:

Ausgehend von einer Schiffsentladung wird der am Spreader hängende Container von oben in die Hubeinrichtung abgesenkt und dabei zentriert, der Spreader wird mit der Hubeinrichtung gekoppelt, wobei die am Basisgerüst (alternativ am Spreader) vorgesehenen Lastaufnahmemittel-Verriegelungen verwendet werden, der am Spreader hängende Container wird von dem Hubrahmen aufgenommen, wobei der Hubrahmen die in ihrer Lage eindeutigen oberen Eckbeschläge des Containers benutzt. Der Hubrahmen wird geringfügig angehoben, die Verbindung zwischen Spreader und Container wird gelöst, der Spreader wird zurückgefahren, die schwenkbaren Teile der Plattform werden in Richtung Container geklappt und die Twistlocks werden vom Personal gelöst. Nach dem Lösen der Twistlocks begibt sich das Personal auf der Plattform wieder in eine, dem Ladeschacht gegenüberliegende Position. Die schwenkbaren Teile der Plattform werden wieder zurückgeklappt. Der Container mit dem Hubrahmen und der Plattform wird durch eine 90°Drehung des Brückenkranes um seine vertikale Achse in Position gebracht und gleichzeitig wird durch Verfahren der Laufkatze des Brückenkranes eine der drei Ladespuren des Transportfahrzeuges (AGV) angesteuert. Der in seine Übergabeposition verfahrene Container wird, noch immer in dem Hubrahmen hängend mit diesem weiter abgesenkt, bis der Container das Fahrzeug erreicht hat.

Die Schwenkanschläge schwenken über die Eckbeschläge des Containers, während sich der Container noch immer im Hubrahmen hängend mit diesem weiter absenkt, bis der Container das Fahrzeug erreicht hat. Das Absetzen des Containers auf das Fahrzeug bewirkt, dass sich der geringfügige Abstand zwischen den Schwenkanschlägen und den Eckbeschlägen auf Null reduziert.

Nach Lösen der Verriegelungen zwischen Hubrahmen und Container wird der Hubrahmen zurück zur Basis der Hubeinrichtung gefahren und ist zur Übernahme eines neuen Containers bereit.

Die neuartige Vorrichtung ist als kostengünstige Ergänzung bekannter Umschlaggeräte vorteilhaft. Je nach Containerumschlaggerät kommt eine stationäre oder eine mobile Ausführung in Frage. Die Kosten für die Anschaffung und Instandhaltung sind im Vergleich zu konventionellen Lösungen, wie sie der gattungsbildende Stand der Technik vorschlägt, deutlich niedriger anzusetzen. Die Vorrichtung eignet sich zur

Vollautomatisierung und ist nachträglich in bestehende Systeme einsetzbar. Die Leistung des Containerterminals lässt sich mit der Erfindung spürbar erhöhen.

Ein Ausführungsbeispiel der Erfindung ist in der Zeichnung dargestellt und wird nachfolgend beschrieben. Es zeigt:
- Figur 1: die Seitenansicht einer Containerbrücke mit der erfindungsgemäßen Verladeeinrichtung,
- Figur 2: eine Detailansicht der erfindungsgemäßen Verladeeinrichtung,
- Figur 3: die Draufsicht auf Figur 2,
- Figur 4: eine Detailansicht der um 90° gedrehten Verladeeinrichtung,
- Figur 5: die Draufsicht auf Figur 4 und
- Figur 6: einen Schnitt durch die um 90° gedrehte, auf eine äußere AGV-Spur positionierte Verladeeinrichtung.

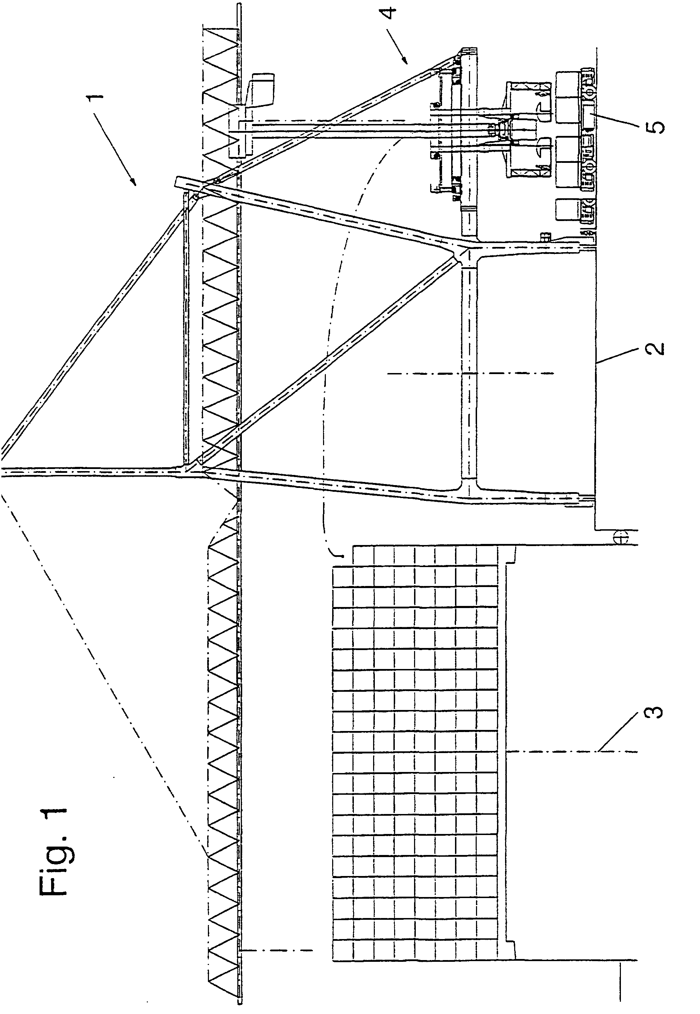

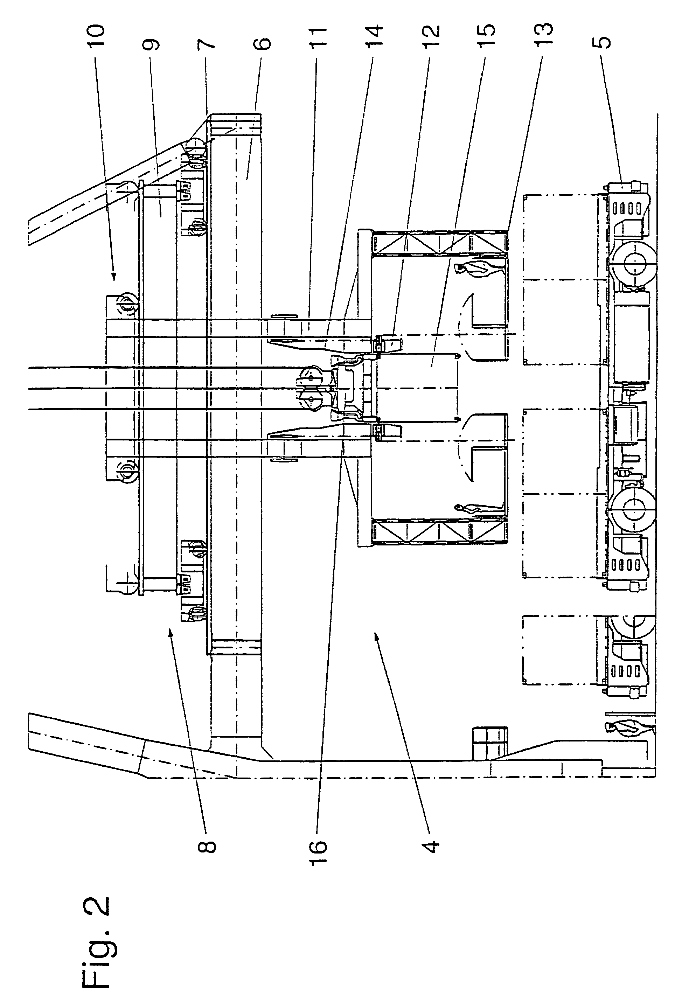

Figur 1 zeigt die Containerbrücke 1 mit der zusätzlichen Verladeeinrichtung 4 vor einem am Kai 2 liegenden Containerschiff 3. Unterhalb der Verladeeinrichtung sind die Ladespuren des führerlosen Transportfahrzeuges (AGV) 5 vorgesehen Die Laufkatze der Containerbrücke transportiert den am Spreader 16 hängenden Container 15 zu der erfindungsgemäßen Verladeeinrichtung. Diese besteht, wie aus Figur 2 ersichtlich, aus dem rückwärtigen Brückenträger 6 mit seiner kreisförmigen Fahrbahn 7 und dem als Rundlaufkran ausgebildeten Brückenkran 8. Letzterer wird aus der Kranbrücke 9 und der Laufkatze 10 gebildet, wobei die Laufkatze 10 das Basisgerüst 11, den Hubrahmen 12 und die Plattform 13 für das Personal aufnimmt.

Das Basisgerüst 11 erhält einen Führungsschacht 14, der sich nach unten hin verjüngt und dadurch den Container 15 und den Spreader 16 an den Längsseiten frühzeitig erfasst und führt. Die Verladeeinrichtung ist in Längsrichtung parallel zur Kaikante ausgerichtet. Unterhalb der Verladeeinrichtung sind die bereitstehenden AGVs 5 zu erkennen.

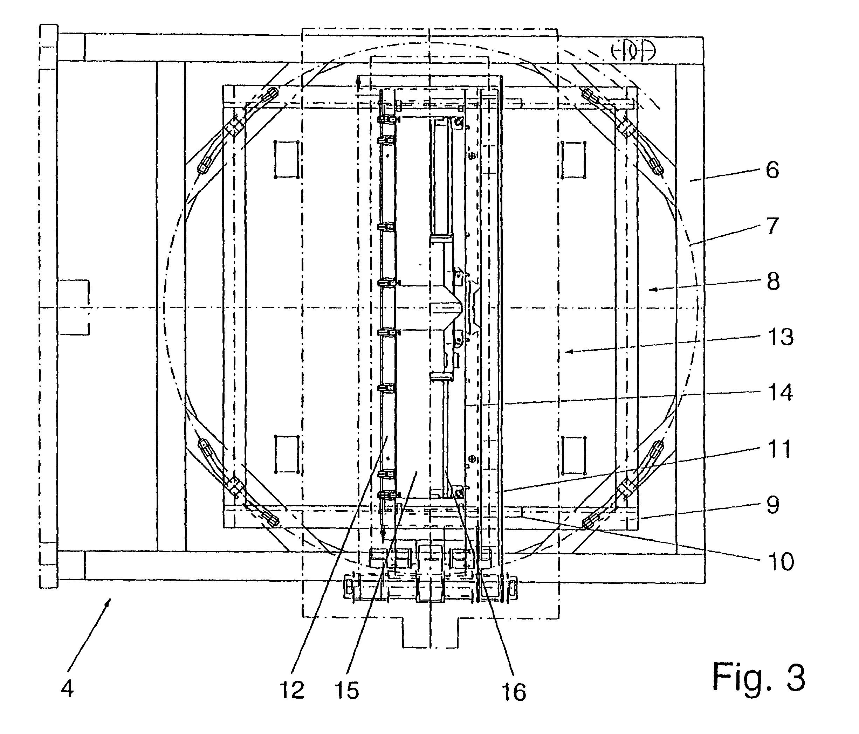

Figur 3 zeigt eine Draufsicht auf die Verladeeinrichtung nach Anspruch 2. Erkennbar sind der Brückenträger 6 mit seiner kreisförmigen Fahrbahn 7, der als Rundlaufkran ausgebildeten Brückenkran 8, die Kranbrücke 9 mit der Laufkatze 10, das Basisgerüst 11, der Hubrahmen 12 und die Plattform 13 für das Personal. Erkennbar ist weiterhin der Führungsschacht 14, der sich nach unten hin verjüngt und dadurch den Container 15 und den Spreader 16 an den Längsseiten frühzeitig erfasst und führt.

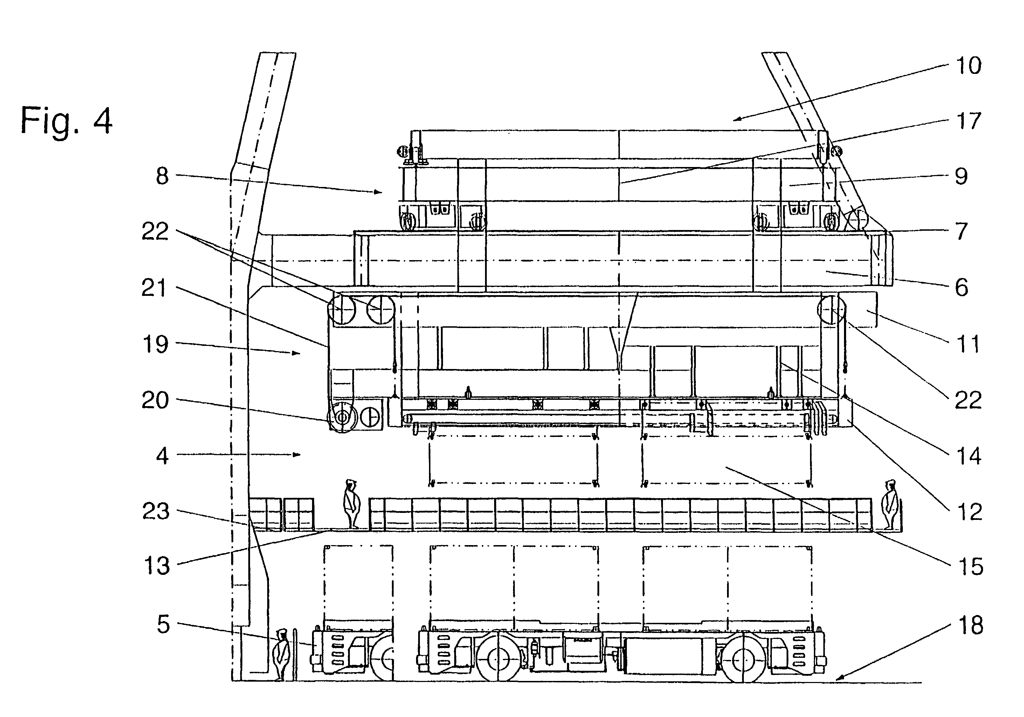

Figur 4 zeigt die Verladeeinrichtung in einer weiteren Arbeitsphase. Der Hubrahmen 12 hat den Container 15 übernommen. Der Brückenkran hat eine 90° Drehung um seine senkrechte Mittelachse 17 vollzogen. Der Drehbewegung überlagert steuert die Laufkatze 10 eine von einer übergeordneten Container-Terminallogik bestimmte AGV-Ladespur 18 an. Unterhalb der Verladeeinrichtung stehen die AGVs 5 bereit. Figur 4 zeigt auch das am Basisgerüst 11 gelagerte Hubwerk 19, bestehend aus einer Winde 20, den vier Seilen 21 und den Umlenkrollen 22, das den Hubrahmen 12 incl. Container 15 in Richtung Kai absenkt. Unterhalb des Hubrahmens 12 erkennt man die Plattform 13, die aus der seitlichen Warteposition in eine Arbeitsposition, d.h. in Richtung Last 5 geschwenkt wurde. Die Container 15 werden, ihrem Typ entsprechend, so weit abgesenkt, bis die Twistlocks an den Containerecken problemlos vom Personal zu erreichen sind. Von der Plattform 13 aus werden die Twistlocks montiert bzw. demontiert.

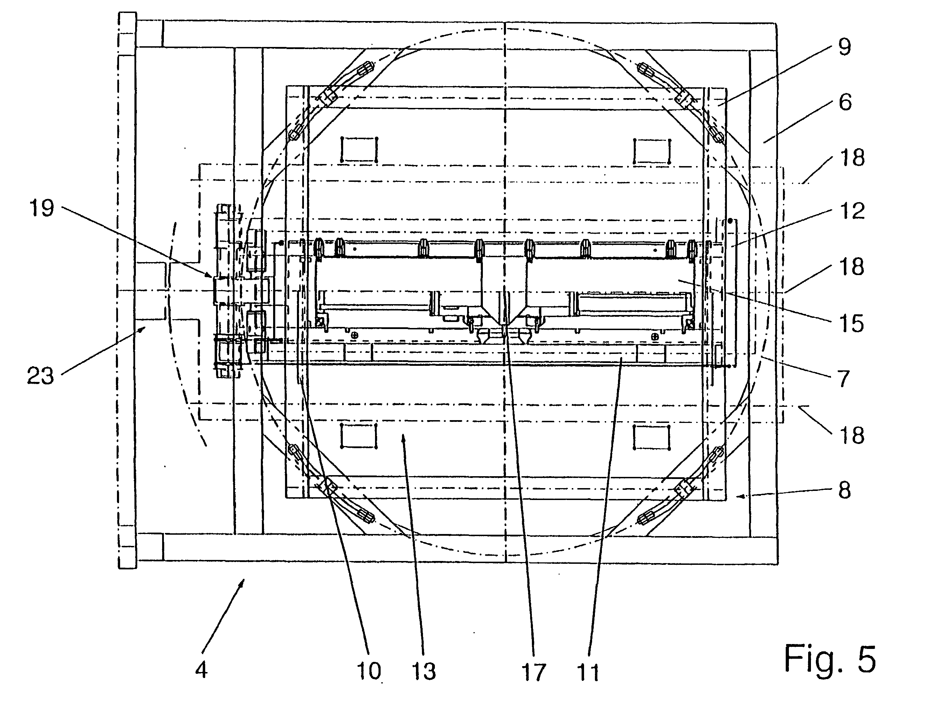

In der Darstellung der Figur 5 hat der Brückenkran 8 hat seine 90° Drehung um die senkrechte Mittelachse 17 vollendet. Der Drehbewegung überlagert hat die Laufkatze 10 eine von einer übergeordneten Container-Terminallogistik bestimmte AGV-Ladespur 18 angesteuert. Das am Basisgerüst 11 gelagerte Hubwerk 19 senkt den Hubrahmen 12 weiter ab.

In der dargestellten Position des Brückenkranes 8 und seiner Laufkatze 10 steht die Plattform für das Personal 13 derart zur Containerbrücke 1, dass ein Betreten oder Verlassen der Plattform über einen Aufstieg 23 möglich ist.

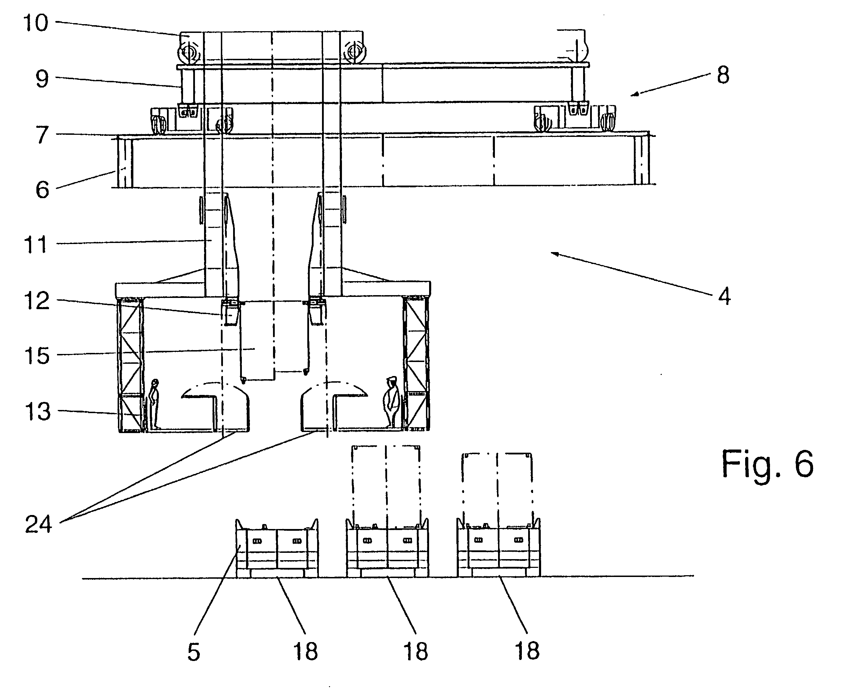

Figur 6 zeigt einen Schnitt durch die um 90° gedrehte Verladeeinrichtung. Der Hubrahmen 12 hat den Container 15 übernommen, der Brückenkran hat seine 90° Drehung um die senkrechte Mittelachse vollzogen. Gleichzeitig mit der Drehbewegung des Brückenkranes hat die Laufkatze 10 die eine von drei vorgesehenen Ladespuren 18 angesteuert, die Last kann jetzt auf das Transportfahrzeug (AGV 5) abgesetzt werden. Vor dem Absenken der Last werden die innenliegenden Längsseiten 24 der Plattform 13 um 90° um eine horizontale Achse hochgeschwenkt, nachdem sich das Personal an eine gesicherte, durch Sensoren überwachte Stelle begeben hat.

## Patentansprüche

1. Verladeeinrichtung für ISO-Container für ein Container-Terminal, das eine Containerbrücke (1) zum Be- und Endladen von Schiffen und automatisierten Zu- und Abtransport der Container (15) mittels selbstfahrender Transportfahrzeuge (5) umfasst, mit mindestens einem Container-Lastaufnahmemittel in Form eines Spreaders (16) sowie Einrichtungen zum Zwischenpositionieren der Container (15) innerhalb der Verladeeinrichtung zwecks Montage oder Demontage der Twistlocks und Plattformen (13) für das damit befasste Personal,
**dadurch gekennzeichnet,**
**dass** die Verladeeinrichtung (4) aus einem um seine senkrechte Mittelachse (17) drehbaren, als Brückenkran (8) mit an dessen Kranbrücke (9) verfahrbarer Laufkatze (10) ausgebildeten Rundlaufkran besteht, der sich auf einer kreisförmigen Fahrbahn (7) abstützt, die vorzugsweise im hinteren Bereich der landseitigen Schiene der Containerbrücke (1) angeordnet ist .

2. Verladeeinrichtung für ISO-Container nach Anspruch 1,
**dadurch gekennzeichnet,**
**dass** die Basis der kreisförmigen Fahrbahn (7) eine rückwärtige horizontale Erweiterung der Containerbrücke (1) ist.

3. Verladeeinrichtung für ISO-Container nach Anspruch 1,
**dadurch gekennzeichnet,**
**dass** die Basis der kreisförmigen Fahrbahn (7) die Kranbrücke (9) eines mobilen Portals mit Schienen- oder Straßenfahrwerkes ist.

4. Verladeeinrichtung für ISO-Container nach Ansprüchen 1 bis 3,
**dadurch gekennzeichnet,**
**dass** die Laufkatze (10) des Brückenkranes (8) eine Hubeinrichtung aufweist, die aus einem schachtartigen Basisgerüst (11) mit Vertikalführungen für den am Spreader (16) hängenden Container (15) sowie einem den Container (15) umgreifenden Hubrahmen (12) gebildet wird der heb- und senkbar unterhalb des schachtartigen Basisgerüstes (11) angeordnet ist.

5. Verladeeinrichtung für ISO-Container nach Anspruch 4,
**dadurch gekennzeichnet,**
**dass** der Hubrahmen (12) nach Lösen des Containers (15) vom Spreader (16) zusammen mit dem Container (15) in Richtung Transportfahrzeug (AGV 18) absenkbar ist, wobei am unteren Ende des Basisgerüstes (11) Mittel zum Ergreifen und Halten des Spreaders (16) sowie am Hubrahmen (12) Mittel zum Ergreifen und Halten des Containers (15) und die Plattform (13) zur Montage oder Demontage der Twistlocks vorgesehen sind

6. Verladeeinrichtung für ISO-Container nach einem der Ansprüche 1 bis 5,
**dadurch gekennzeichnet,**
**dass** der Drehbewegung des Brückenkranes (8) zur Ansteuerung einer Ladeposition eine Längsbewegung der Laufkatze (10) an der Kranbrücke (9) überlagerbar ist.

7. Verladeeinrichtung für ISO-Container nach einem der Ansprüche 4 bis 6,
**dadurch gekennzeichnet,**
**dass** das Basisgerüst (11) einen sich nach unten verjüngenden Führungsschacht (14) bildet, der den abgesenkten Spreader (16) mit dem Container (15) an ihren Längsseiten führend erfasst und der an seinen den Längsseiten des Containers (15) zugewandten Innenseiten mit vertikal verlaufenden Gleitführungen versehen ist, in die zwei aus der Mitte des Spreaders (16) beidseitig aus- und einfahrbare Bolzen eingreifen.

8. Verladeeinrichtung für ISO-Container nach einem der Ansprüche 4 bis 7,
**dadurch gekennzeichnet,**
**dass** am unteren dem Hubrahmen (12) zugewandten Ende des Basisgerüstes (11) auf jeder Längsseite acht fernbetätigbare Lastaufnahmemittel-Verriegelungsbolzen vorgesehen sind, deren Anordnung mit der Anordnung von Öffnungen in den Beschlägen des normierten Spreaders (16) korrespondieren.

9. Verladeeinrichtung für ISO-Container nach Anspruch 8,
**dadurch gekennzeichnet,**
**dass** am unteren dem Hubrahmen (12) zugewandten Ende des Basisgerüstes (11) auf jeder Längsseite acht Auflagepunkte für vier hydraulisch fernbetätigbare Lastaufnahmemittel-Schwenkanschläge vorgesehen sind, die am normierten Spreader (16) an den Twistlock-Lagerungen ein- und ausschwenkbar angeordnet sind.

10. Verladeeinrichtung für ISO-Container nach einem der Ansprüche 4 bis 9,
**dadurch gekennzeichnet,**
**dass** im oberen Bereich jeder Längsseite des Hubrahmens (12) acht fernbetätigbare Lastaufnahme-Verriegelungsbolzen vorgesehen sind, deren Anordnung mit der Anordnung von Öffnungen in den Beschlägen des ISO-Containers (15) korrespondieren.

11. Verladeeinrichtung für ISO-Container nach einem der Ansprüche 4bis 10,
**dadurch gekennzeichnet,**
**dass** der Hubrahmen (12) an vier am Basisgerüst (11) befestigten vertikal ausgerichteten Hydraulikzylindern aufgehängt ist, deren am Hubrahmen (12) angreifende Stangenköpfe jeweils mit einem sich in Hubrichtung erstreckendem Langloch versehen sind.

12. Verladeeinrichtung für ISO-Container nach einem der Ansprüche 4 bis 10,
**dadurch gekennzeichnet,**
**dass** der Hubrahmen (12) an vier am Basisgerüst befestigten Hubseilen (21) eines Seilhubwerkes (19) aufgehängt ist.

13. Veriadeeinrichtung für ISO-Container nach einem der Ansprüche 4 bis 12,
**dadurch gekennzeichnet,**
**dass** dem Container zugewandte Längsseitenbereiche (24) der an dem Basisgerüst (11) aufgehängten Plattform (13) zur Montage oder Demontage der Twistlocks der Container aus einer Wartestellung, in der diese Längsseitenbereiche (24) zur Vergrößerung des Ladeschachtes im Wesentlichen senkrecht stehen, in eine horizontale Arbeitsstellung dicht neben dem Container (15) klappbar sind und nach erfolgter Montage oder Demontage der Twistiocks in die im Wesentlichen senkrechte Wartestellung zurückklappbar sind, in der gleichzeitig das Personal durch die hochgeklappten Längsseitenbereiche (24) absturzgesichert ist.

14. Arbeitsverfahren zum Betrieb einer Verladeeinrichtung für ISO-Container wie in den vorhergehenden Ansprüchen beschrieben, mit den folgenden aufeinanderfolgenden Arbeitsschritte:
a) Ausgehend von einer Schiffsentladung wird der am Spreader (16) hängende Container (15) von oben in das schachtartige Basisgerüst (11) der Hubeinrichtung abgesenkt und dabei zentriert,
b) der Spreader (16) wird mit der Hubeinrichtung gekoppelt,
c) der am Spreader (16) hängende Container (15) wird von dem Hubrahmen (12) aufgenommen,
d) der Hubrahmen (12) wird geringfügig angehoben,
e) die Verbindung zwischen Spreader (16) und Container (15) wird gelöst,
f) der Spreader (16) wird zurückgefahren,
g) die schwenkbaren Teile der Plattform(13) werden in Richtung Container (15) geklappt und die Twistlocks werden vom Personal gelöst,
h) das Personal begibt sich auf der Plattform (13) in eine gesicherte, durch Sensoren überwachte Position,
i) die schwenkbaren Teile der Plattform (13) werden zurückgeklappt,
l) der in seine Übergabeposition verfahrene Container (15) wird, noch immer in dem Hubrahmen (12) hängend mit diesem weiter abgesenkt, bis der Container (15) das Fahrzeug (5) erreicht hat, **gekennzeichnet durch** die Schritte:
j) der Container (15) mit dem Hubrahmen (12) und der Plattform (13) wird **durch** eine 90°Drehung des Brückenkranes (8) um seine vertikale Achse in Position gebracht und gleichzeitig wird **durch** Verfahren der Laufkatze (10) des Brückenkranes (8) eine der drei Ladespuren des Transportfahrzeuges (5, AGV) angesteuert,
k) nach Lösen der Verriegelungen zwischen Hubrahmen (12) und Container (15) wird der Hubrahmen (12) zurück zur Basis des Basisgerüstes (11) gefahren und ist zur Übernahme eines neuen Containers (15) bereit.

## Claims

1. Loading device for ISO containers for a container terminal which contains a container bridge (1) for loading and unloading ships and the automated inward and outward transport of the containers (15) by means of automotive transport vehicles (5), having at least one container load receiving member in the form of a spreader (16) as well as devices for the intermediate positioning of the containers (15) within the loading device for the purpose of assembling or disassembling the twist locks and platforms (13) for the personnel dealing therewith,
**characterised in that** the loading device (4) consists of a rotating crane which can be rotated about its vertical central axis (17), is formed as a bridge crane (8) having a trolley (10) which can move on the crane bridge (9) of the bridge crane (8), and is supported on a circular track (7) which is preferably disposed in the rear region of the land-side rail of the container bridge (1).

2. Loading device for ISO containers as claimed in Claim 1, **characterised in that** a rearward horizontal extension of the container bridge (1) serves as the base of the circular track (7).

3. Loading device for ISO containers as claimed in Claim 1, **characterised in that** the crane bridge (9) of a mobile gantry having rail or road travelling mechanisms serves as the base of the circular track (7).

4. Loading device for ISO containers as claimed in Claims 1 to 3, **characterised in that** the trolley (10) of the bridge crane (8) comprises a hoisting device which is formed from a shaft-like basic framework (11) having vertical guides for the containers (15) suspended on the spreader (16) as well as a hoisting frame (12) which surrounds the containers (15) and is disposed beneath the shaft-like basic framework (11) so as to be able to be hoisted and lowered.

5. Loading device for ISO containers as claimed in Claim 4, **characterised in that** the hoisting frame (12) can be lowered with the container (15) in the direction of the transport vehicle (AGV 18) after the container (15) has been released from the spreader (16), wherein means for grasping and holding the spreader (16) are provided on the lower end of the basic framework (11) and means for grasping and holding the container (15) and the platform (13) for assembling or disassembling the twist locks are provided on the hoisting frame (12).

6. Loading device for ISO containers as claimed in any one of Claims 1 to 5,
**characterised in that** a longitudinal movement of the trolley (10) on the crane bridge (9) can be superimposed upon the rotational movement of the bridge crane (8) for controlling a loading position.

7. Loading device for ISO containers as claimed in any one of Claims 4 to 6,
**characterised in that** the basic framework (11) forms a guide shaft (14) which tapers in the downward direction, engages the lowered spreader (16) with the container (15) at its longitudinal sides in a guiding manner and is provided with vertically extending sliding guides on its inner sides facing the longitudinal sides of the container (15), wherein two bolts which can be extended and retracted from the centre of the spreader (16) on both sides engage in said sliding guides.

8. Loading device for ISO containers as claimed in any one of Claims 4 to 7,
**characterised in that** on each longitudinal side eight load receiving member locking bolts, which can be actuated remotely, are provided on the lower end of the basic framework (11) facing the hoisting frame (12), wherein the arrangement of the locking bolts corresponds with the arrangement of apertures in the fittings of the standardised spreader (16).

9. Loading device for ISO containers as claimed in Claim 8, **characterised in that** on each longitudinal side eight points of support for four load receiving member swing stops, which can be hydraulically actuated remotely, are provided on the lower end of the basic framework (11) facing the hoisting frame (12), wherein the swing stops are disposed on the standardised spreader (16) on the twist lock bearings so as to be able to be swung in and out.

10. Loading device for ISO containers as claimed in any one of Claims 4 to 9,
**characterised in that** eight load receiving locking bolts, which can be actuated remotely, are provided in the upper region of each longitudinal side of the hoisting frame (12), wherein the arrangement of the locking bolts corresponds with the arrangement of apertures in the fittings of the ISO container (15).

11. Loading device for ISO containers as claimed in any one of Claims 4 to 10,
**characterised in that** the hoisting frame (12) is suspended on four vertical hydraulic cylinders which are attached to the basic framework (11), wherein the bar heads of the hydraulic cylinders which engage the hoisting frame (12) are each provided with a longitudinal hole extending in the hoisting direction.

12. Loading device for ISO containers as claimed in any one of Claims 4 to 10,
**characterised in that** the hoisting frame (12) is suspended on four hoisting cables (21) of a cable hoisting mechanism (19) which are attached to the basic framework.

13. Loading device for ISO containers as claimed in any one of Claims 4 to 12,
**characterised in that** for assembly or disassembly of the twist locks of the containers, longitudinal side regions (24), facing the container, of the platform (13) suspended on the basic framework (11) can be folded from a rest position, in which these longitudinal side regions (24) are essentially vertical in order to enlarge the loading shaft, into a horizontal working position where they lie closely next to the container (15) and can be folded back into the essentially vertical rest position after the twist locks have been assembled or disassembled, in which rest position the personnel are protected from falling by the folded-up longitudinal side regions (24).

14. Operational method for operating a loading device for ISO containers as claimed in the preceding Claims, having the following successive operational steps:
a) based on unloading from a ship, the container (15) suspended on the spreader (16) is lowered from above into the shaft-like basic framework (11) of the hoisting device and centred thereby,
b) the spreader (16) is coupled to the hoisting device,
c) the container (15) suspended on the spreader (16) is received by the hoisting frame (12),
d) the hoisting frame (12) is raised slightly,
e) the connection between the spreader (16) and the container (15) is released,
f) the spreader (16) is returned,
g) the pivoting parts of the platform (13) are folded in the direction of the container (15) and the twist locks are released by personnel,
h) the personnel move on the platform (13) into a safe position monitored by sensors,
i) the pivoting parts of the platform (13) are folded back,
l) the container (15) moved into its transfer position is, whilst still suspended in the hoisting frame (12), lowered with said hoisting frame until the container (15) reaches the vehicle (5),
**characterised by** the steps:
j) the container (15) together with the hoisting frame (12) and the platform (13) is brought into position by means of the bridge crane (8) moving through 90° about its vertical axis and simultaneously one of the three loading tracks of the transporting vehicle (5, AGV) is activated by movement of the trolley (10) of the bridge crane (8),
k) after the locks between the hoisting frame (12) and the container (15) are released, the hoisting frame (12) is returned to the base of the basic framework (11) and is ready for receiving a new container (15).

## Revendications

1. Dispositif de chargement pour conteneurs ISO, qui comprend un pont (1) pour conteneurs, pour le chargement et le déchargement de navires et pour le transport d'amenée et d'enlèvement automatique des conteneurs (15) au moyen de véhicules de transport automatique, avec au moins un dispositif de préhension de conteneurs en forme de palonnier (16) ainsi qu'avec des dispositifs pour le positionnement intermédiaire des conteneurs (15) dans le dispositif de chargement aux fins de montage ou de démontage des verrous rotatifs et des plateformes (13) pour le personnel y préposé,
**caractérisé en ce que**
le dispositif de chargement (4) est composé d'une grue rotative qui, tournant autour de son axe central, vertical (17), est conçue sous la forme d'un pont portique (8), avec un chariot (10) mobile sur son pont de grue, laquelle grue rotative prend appui sur une voie de roulement circulaire (7) qui, de préférence, est disposée dans le domaine arrière du rail du pont pour conteneurs (1), côté terre ferme.

2. Dispositif de chargement pour conteneurs ISO selon la revendication 1, **caractérisé en ce que** la base de la voie de roulement circulaire (7) est un élargissement horizontal, postérieur du pont pour conteneurs (1).

3. Dispositif de chargement pour conteneurs ISO selon la revendication 1, **caractérisé en ce que** la base de la voie de roulement circulaire (7) est le pont de grue (9) d'un portal mobile avec système de rails et de voies.

4. Dispositif de chargement pour conteneurs ISO selon l'une des revendications 1 à 3, **caractérisé en ce que** le chariot (10) du pont portique (8) présente un dispositif de levage qui est formé par une charpente (11) en forme de cage, avec des guides verticaux pour le conteneur (15) suspendu au palonnier (16), ainsi que par un cadre de levage (12) qui agrippe ledit conteneur (15), lequel, mobile en ascension et en descente, est disposé au-dessous de la charpente (11) en forme de cage.

5. Dispositif de chargement pour conteneurs ISO selon la revendication 1, **caractérisé en ce que** le cadre de levage (12), après que le conteneur (15) ait été détaché du palonnier (16), peut être abaissé, avec ledit conteneur (15), dans la direction (AGV 18) du véhicule de transport, l'extrémité inférieure de la charpente (11) étant équipée d'organes pour agripper et pour maintenir le palonnier (16), et le cadre de levage (12) étant équipé d'organes pour agripper et pour maintenir le conteneur (15) et de la plateforme (13) pour le montage et le démontage des verrous rotatifs.

6. Dispositif de chargement pour conteneurs ISO selon l'une des revendications 1 à 5, **caractérisé en ce qu'**au mouvement rotatif du pont portique (8) en direction d'une position de chargement peut être superposé un mouvement longitudinal du chariot (10) sur le pont de grue (9).

7. Dispositif de chargement pour conteneurs ISO selon l'une des revendications 4 à 6, **caractérisé en ce que** la charpente de base (11) forme une cage de guidage (14) qui, se rétrécissant vers le bas, agrippe le palonnier abaissé (16) avec le conteneur (15), en les guidant par leurs côtés longitudinaux, et est pourvue, sur ses surfaces intérieures, dirigées vers les surfaces longitudinales du conteneur (15), de guides coulissants, orientés verticalement, dans lesquels s'engagent deux goujons qui, à partir du centre du palonnier (16) peuvent être extraits et rétractés de part et d'autre.

8. Dispositif de chargement pour conteneurs ISO selon l'une des revendications 4 à 7, **caractérisé en ce que**, sur chaque côté longitudinal, à l'extrémité inférieure de la charpente de base (11) dirigée vers le cadre de levage (12), huit goujons de verrouillage des organes de préhension de charge, actionnés à distance, sont prévus, dont la disposition correspondant à la disposition d'orifices pratiqués dans les ferrures du palonnier standardisé (16).

9. Dispositif de chargement pour conteneurs ISO selon la revendication 8, **caractérisé en ce que**, sur chaque côté longitudinal, à l'extrémité inférieure de la charpente de base (11) dirigée vers le cadre de levage (12), sont prévus huit points d'appui pour quatre butées de pivotement pour organes de préhension de charge à télécommande hydraulique, lesquels sont disposés, de manière à pouvoir pivoter en et hors prise, sur le palonnier standardisé (16), aux supports à verrous tournants.

10. Dispositif de chargement pour conteneurs ISO selon l'une des revendications 4 à 9, **caractérisé en ce que**, dans la section supérieure de chaque côté longitudinal du cadre de levage (12), sont prévus huit boulons de verrouillage des organes de préhension de charge télécommandés, dont la disposition correspondant à la disposition des ouvertures pratiquées dans les ferrures du conteneur ISO (15).

11. Dispositif de chargement pour conteneurs ISO selon l'une des revendications 4 à 10, **caractérisé en ce que** le cadre de levage (12) est suspendu à quatre cylindres hydrauliques, orientés verticalement et fixés à la charpente de base, dont les têtes, qui entrent en prise avec le cadre de levage (12), sont pourvues chacune d'un trou oblong qui s'étend dans le sens de levage.

12. Dispositif de chargement pour conteneurs ISO selon l'une des revendications 4 à 10, **caractérisé en ce que** le cadre de levage (12) est suspendu par quatre câbles de levage (21) d'un système de câbles de levage, lesquels sont fixés à la charpente de base (21).

13. Dispositif de chargement pour conteneurs ISO selon l'une des revendications 4 à 12,
**caractérisé en ce que** les sections latérales, longitudinales (24) de la plate-forme (13) accrochée à la charpente de base (11), orientées vers le conteneur, peuvent être dépliées, lors du montage ou du démontage des verrous rotatifs du conteneur, pour passer d'une position d'attente, dans laquelle ces sections latérales, longitudinales (24) sont orientées sensiblement verticalement pour agrandir la cage de chargement, à une position de travail horizontale, à proximité étroite du conteneur (15) et, après accomplissement du montage ou du démontage des verrous rotatifs, repliées dans la position d'attente sensiblement verticale, dans laquelle le personnel est simultanément protégé contre les chutes par les sections latérales, longitudinales (24) relevées.

14. Procédé de travail pour l'exploitation d'un dispositif de chargement de conteneurs ISO, tel qu'il est décrit dans les revendications précédentes,
lequel procédé comprend les étapes suivantes:
a) Partant d'un déchargement de navire, le conteneur (15) accroché au palonnier (16) est descendu, d'en haut, dans la charpente de base (11) en forme de cage du dispositif de levage, tout en étant centré,
b) le palonnier (16) est couplé avec le dispositif de levage,
c) le conteneur (15), suspendu au palonnier (16), est pris en charge par le cadre de levage (12),
d) le cadre de levage (12) est légèrement soulevé,
e) le conteneur (15) est détaché du palonnier (16),
f) le palonnier (16) est ramené en arrière,
g) les parties pivotantes de la plate-forme (13) sont rabattues en direction du conteneur (15) et les verrous rotatifs sont desserrés par le personnel,
h) le personnel se rend sur la plate-forme (13) dans une position sécurisée, contrôlée par des capteurs,
i) les pièces pivotantes sont repliées,
l) le conteneur (15), conduit dans sa position de transfert, encore suspendu dans le cadre de levage (12), est descendu, avec celui-ci, jusqu'à ce que ledit conteneur (15) atteigne le véhicule (5),
**caractérisé par** les étapes :
j) le conteneur (15) est positionné, avec le cadre de levage (12) et la plate-forme (13), par un pivotement du pont portique (8) de 90o sur son axe vertical, et dirigé vers l'une des trois pistes de chargement du véhicule de transport (5, AGV), par déplacement du chariot (10) du pont portique (8),
k) après déverrouillage du cadre de levage (12) et du conteneur (15), le cadre de levage (12) est ramené à la base de la charpente (11) et est prêt à prendre en charge un nouveau conteneur (15).
